# EUROPÄISCHE PATENTSCHRIFT

(11) **EP 0 518 848 B1**
(45) Veröffentlichungstag und Bekanntmachung des Hinweises auf die Patenterteilung: **23.08.1995**
(21) Anmeldenummer: 92890133.9
(22) Anmeldetag: 01.06.1992
(51) Int. Cl.: B23K 9/20, B23K 31/00

(54) **Verbindung von metallischen Blechen und Verfahren zum Verbinden derselben**
Joint of metal sheets and method for connection
Connexion de tôles métalliques et procédé pour connecter celles-ci

(30) Priorität: 10.06.1991 AT 1163/91
(43) Veröffentlichungstag der Anmeldung: 16.12.1992
(73) Patentinhaber: BERNDORF METALL- UND BÄDERBAUGESELLSCHAFT M.B.H., A-2560 Berndorf (AT)
(72) Erfinder: Hann-Gehrer, Johann, Dipl.-Ing., A-2500 Baden (AT); Votruba, Herbert,Ing., A-2603 Felixdorf (AT)
(74) Vertreter: Widtmann, Georg, Dipl.-Ing. Dr. techn.

(56) Entgegenhaltungen:
- US-A- 2 851 771

## Beschreibung

Die Erfindung bezieht sich auf eine Verbindung von metallischen Blechen, insbesondere für Schwimmbecken, und auf ein Verfahren zur Herstellung derartiger Verbindungen.

Zur Verbindung von metallischen Blechen ist es hinläufig bekannt, diese durch Löten bzw. Schweißen miteinander zu verbinden. Beim Löten weist in der Regel das zur Verbindung dienende Material, eine Legierung einen niedrigeren Schmelzpunkt auf als die miteinander zu verbindenden Materialien. Durch die Lötverbindung ist somit ein unterschiedliches Material an den zu verbindenden Blechen bedingt, so daß die Gebrauchseigenschaften, z. B. Korrosionsverhalten, optische Eigenschaften, wie beispielsweise Reflektionsvermögen, unterschiedlich sind.

Die Verbindung von Blechen, insbesondere metallische Verbindung von Blechen, erfolgt entweder so, daß dieselben an ihren aneinander anstoßenden Stirnflächen verschweißt werden, oder daß die jeweils zur Verbindung bestimmten Enden einander überlappen und die Schweißnähte im überlappenden Bereich angebracht werden.

Zur Verbindung von Blechen ist es auch bekannt, das sogenannte Punktschweißverfahren anzuwenden, bei dem beidseitig zu den zu verbindenden Blechen jeweils eine Elektrode angeordnet ist, und die in Anlage zueinander gebrachten Bleche über Stromdurchfluß miteinander verschweißt werden.

Diesen Verbindungen von Blechen durch Schweißen ist gemeinsam, daß auf beiden Seiten der Oberfläche der zu verbindenden Bleche Markierungen entstehen, die bei Blechen, welche nach dem Verbinden einer Oberflächenbehandlung, z.B. Lackieren od. dgl., unterworfen werden, von untergeordneter Bedeutung sind. Weisen jedoch Bleche, bereits eine besondere Oberfläche auf, wie beispielsweise hochglanzpoliert od. dgl., so ist eine besondere Benachteiligung gegeben.

Zur Verbindung von metallischen Teilen ist es bereits bekannt, Bolzenelemente mit der Oberfläche von Blechen zu verschweißen. Diese Bolzenelemente weisen an ihrer Stirnfläche einen oder mehrere Vorsprünge auf, die bei Durchfluß von Strom bevorzugt abschmelzen und auch für ein bevorzugtes Aufschmelzen des Bleches in diesem Bereich Sorge tragen. Die Wärmeeinbringung in das Blech ist dabei so gering, daß, wie in der US-A1 4 130 751 beschrieben, lackierte Bleche mit Bolzenelementen versehen werden können, wobei der Lack lediglich unter der Stirnfläche des Bolzenelementes zerstört wird, hingegen angrenzende Bereiche eine unbeeinträchtigte Lackierung aufweisen. Derartige Bolzenelemente dienen sodann zur mechanischen Befestigung von Zierteilen od. dgl.

Aus der DE-B1 27 39 867 wird ein Verfahren zum Befestigen eines ersten leitfähigen Teiles an einem zweiten leitfähigen Teil bekannt, bei welchem ein Bolzenelement mit der Oberfläche eines Bleches verschweißt wird, wobei das Schmelzbad nicht bis zur benachbarten, d. h. anderen, Oberfläche des Bleches reicht. Durch diesen Schweißvorgang kann eine Markierung auf der anderen Oberfäche des Bleches vermieden werden. Dieses Bolzenelement dient seinerseits wieder zur Befestigung eines weiteren Bleches am ersten Blech. Die Verbindung der beiden Blechteile wird nun derart durchgeführt, daß ein erstes Blech mit einem weiteren Blech in Anlage gebracht wird, welches weitere Blech eine zylindrische Ausnehmung aufweist. In diese zylindrische Ausnehmung wird eine Büchse aus elektrisch isolierendem Material eingelegt, wonach das pilzförmige Bolzenelement eingelegt wird. Sodann wird die Stirnfläche des Bolzenelementes mit dem ersten Blech verschweißt und gleichzeitig gegen das erste Blech gepreßt. Durch diese Vorgangsweise wird erreicht, daß lediglich ein Verschweißen im Stirnbereich des Bolzenelementes eintritt und keine größere Wärmeeinbringung erfolgt, so daß eine Markierung auf der anderen Oberfläche des ersten Bleches vermieden wird. Das Bolzenelement weist an seiner zu verschweißenden Oberfläche ebenfalls einen Vorsprung auf.

Anstelle der pilzförmigen Gestaltgebung, wodurch ein Festhalten des weiteren Bleches am ersten Blech bedingt wird, kann auch das Bolzenelement mit mehreren Ausnehmungen versehen sein, in welcher ein Haltekörper eingreift, der seinerseits das weitere Blech gegen das erste Blech hält.

Dem Research Disclosure December 1989, Nr. 96090 ist eine Verbindung von zwei Blechen zu entnehmen, wobei in einem zweiten Blech eine entsprechende Ausnehmung vorgesehen ist, durch welche ein Bolzen geführt wird, der bis zu einem ersten Blech reicht. Sodann wird der Bolzen mit dem ersten Blech verschweißt und eine Scheibe, die der Bolzen am anderen Ende trägt, durch Schmieden in das zweite Blech gepreßt. Die Ausbildung der Schweißbäder ist dieser Literaturstelle nicht zu entnehmen. Dem Welding Handbook Seventh Edition, Volume 2, American Welding Society, 1978, Seiten 266 bis 269 ist ein Verfahren zu entnehmen, bei dem ein Bolzen mit einem ersten Blech verschweißt wird. Die Ausgestaltung des Schweißbades sowie allfällige Wärmemarkierungen sind hier ebenfalls nicht angeführt. Es wird sodann über das erste Blech ein weiteres Blech angeordnet, das eine entsprechende Ausnehmung aufweist, wobei die Verbindung der Bleche durch eine Mutter, welche mit einem entsprechenden Gewinde des Bolzens kooperiert, durchgeführt ist.

Die Erfindung hat sich zur Aufgabe gestellt, eine Schweißverbindung zwischen Blechteilen zu schaffen, bei welcher eine dekorativ gestaltete Oberfläche eines Bleches frei von Markierungen, aber auch von färbenden Oxidationsfilmen, bleibt.

Die erfindungsgemäße Verbindung von metallischen Blechen, insbesondere für Schwimmbecken, wobei ein erstes Blech mit zumindest einem metallischen Bolzenelement an der Stirnfläche desselben verschweißt ist, und das Bolzenelement ein weiteres metallisches Blech gegen das erste Blech hält, besteht darin, daß das Bolzenelement mit einem Bereich des weiteren Bleches verschweißt ist, welcher im Abstand vom ersten Blech ist und das erstarrte Schweißbad unter der das Bolzenelement tragenden Oberfläche vor der benachbarten dekorativ gestalteten Oberfläche des ersten Bleches endigt und die dekorative Oberfläche frei von Markierungen durch Wärmeeinbringung ist. Dadurch, daß die Schweißverbindung zwischen den beiden Blechen über ein Bolzenelement besteht, kann die Wärmeeinbringung besonders gering gehalten werden, da der Wärmewert des Bolzens gegenüber dem der Bleche gering ist. Je nach erwünschter Festigkeit ist die Anzahl der Bolzenelemente zu wählen. Eine derartige Verbindung ist hervorragend geeignet, an Blechen mit dekorativer Oberfläche an der dieser gegenüberliegenden Oberfläche weitere Bleche, z. B. Versteifungsprofile od. dgl., anzubringen. Die Schweißverbindung weist hiebei gegenüber den anderen, u. zw. lösbaren und unlösbaren, Verbindungen den Vorteil auf, daß selbst bei hoher schwingender Beanspruchung kein Lösen der Verbindung stattfindet und auch keine zusätzlichen elektrischen Isolierungen zwischen den Blechen vorgesehen werden müssen.

Ist das Bolzenelement an seiner der verschweißten Stirnfläche gegenüberliegenden Stirnfläche mit dem weiteren Blech verschweißt, so erfolgt der Wärmeübergang hauptsächlich über das Bolzenelement, wobei durch den Bolzen selbst eine Zeitverzögerung in dem Wärmeübergang gegeben ist, die gleichzeitig auch zur Wärmeabgabe an die Umgebung durch den Bolzen dient.

Liegt das Bolzenelement an dem weiteren Blech zumindest mit einer Erzeugenden an der Mantelfläche an und ist teilweise entlang derselben verbunden, so kann eine genaue Positionierung der Bleche zueinander erreicht werden, wobei gleichzeitig die Schweißstelle besonders leicht zugänglich ist, und die Bolzen wirken entlang ihrer gesamten Länge als Verstärkungselement für das weitere Blech.

Ist die Oberfläche des verschweißten Bereiches des weiteren Bleches quer zum ersten Blech angeordnet, so kann eine besonders gute Versteifung des ersten Bleches erreicht werden, wobei gleichzeitig durch den Bolzen an der Schweißstelle eine besonders gute Verstärkung des weiteren Bleches gewährleistet ist.

Ist zwischen der Schweißverbindung des ersten Bleches mit dem Bolzen und des weiteren Bleches mit demselben ein Leerraum, insbesondere ein nicht verschweißter Bereich, vorgesehen, so wird ein direkter Wärmeübergang zwischen den Schweißverbindungen bei der Herstellung desselben besonders wirksam vermieden.

Ist das weitere Blech zumindest U-förmig, wobei die Bolzen an den Schenkeln des U's anliegen und mit einer Schweißverbindung entlang der Mantelfläche mit dem weiteren Blech verbunden sind, so kann eine besonders vorteilhafte Versteifung des Bleches mit großflächigen Schweißnähten erreicht werden, wobei weiters ein direktes Verschweißen der Bleche, z. B. wenn der Bolzen verschweißt wird, vermieden wird.

Das erfindungsgemäße Verfahren zum Verbinden von metallischen Blechen, wobei zumindest ein Bolzenelement an seiner Stirnfläche, insbesondere elektrisch, mit der Oberfläche eines ersten Bleches verschweißt wird, und ein weiteres Blech zum ersten Blech über das Bolzenelement gegen dieses gehalten wird, besteht darin, daß das Bolzenelement mit einem Bereich des weiteren Bleches verschweißt wird, welcher im Abstand vom ersten Blech ist und das erstarrte Schweißbad unter der das Bolzenelement tragenden Oberfläche vor der benachbarten dekorativ gestaltenen Oberfläche des ersten Bleches endigt, und die dekorative Oberfläche frei von Markierungen durch Wärmeeinbringung ist. Durch diese besonders einfache Vorgangsweise wird ein Verschweißen zwischen Blechen möglich, ohne Markierungen auf der Oberfläche des ersten Bleches zu verursachen und erlaubt eine besonders einfache Vorgangsweise beim Verschweißen.

Im folgenden wird die Erfindung anhand der Zeichnungen näher erläutert.

Es zeigen:
Fig. 1 ein an ein Blech angeschweißtes Bolzenelement, teilweise im Schnitt,
Fig. 2 zwei miteinander verbundene Blechteile,
Fig. 3 und 4 eine weitere Verbindung in Ansicht von vorne bzw. von oben gesehen.

Das Blech 1 ist an seiner Oberfläche 2 mit einem Bolzenelement 4 durch Elektroschweißen verbunden. Das erstarrte Schweißbad 5 reicht nicht bis zur anderen Oberfläche 3 des Bleches, so daß jede Markierung auf dieser Oberfläche vermieden ist. Sowohl das Blech 1 als auch das Bolzenelement 4 besteht aus einer rostfreien Chrom-Nickel-Legierung. Die Spannung und die Stromstärke wird beim Bolzenschweißgerät so gewählt, daß die Oberfläche 3 des Bleches 1 nicht angeschmolzen wird. Das Bolzenelement kann, um eine besonders punktförmige Erhitzung sowohl des Bolzens als auch des Bleches zu erreichen, an seiner Stirnfläche mit einer oder mehreren Erhebungen versehen sein. Die Oberfläche 3 des Bleches 1 kann hochglanzpoliert oder auch jede andere Oberflächengestaltung aufweisen und. unterliegt keiner Beeinträchtigung während des Schweißvorganges und weist keine färbenden Oxidationsfilme auf.

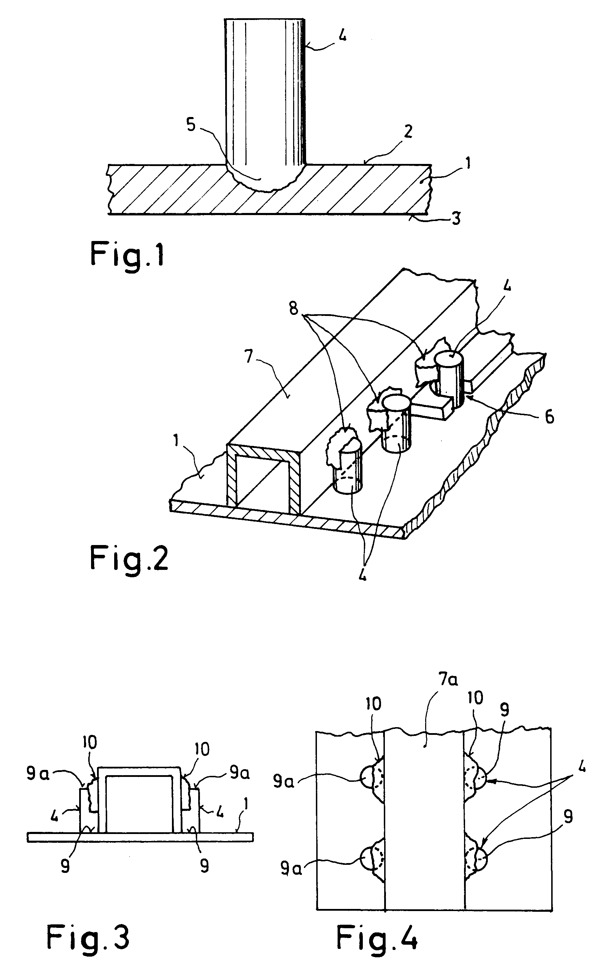

Wie in Fig. 2 dargestellt, kann das Blech 1 mehrere Bolzenelemente 4 tragen, die entweder direkt am Schenkel des U-förmigen Bleches 7 anliegen (vorderer Teil der Verbindung) oder die durch Ausnehmungen 6 eines weiteren Bleches 7, das teilmäanderförmig ausgebildet ist, reichen. Die Bolzenelemente 4 weisen an ihrer zylinderförmigen Seitenfläche, die zum weiteren Blech 7, das teilweise quer zum Blech 1 angeordnet ist, eine Schweißverbindung 8 auf. Diese Schweißverbindung 8 ist entfernt von jener Schweißstelle angeordnet, die das Bolzenelement 4 mit dem Blech 1 verbindet. Zur Verbindung der Bleche 1 und 7 wird nun so vorgegangen, daß vorerst die Bolzenelemente 4, u. zw. beidseitig, zu dem Blech 7 gesetzt werden, worauf dasselbe in Anlage auf das Blech 1 gebracht wird. Sodann werden die Bolzenelemente 4 mit dem Blech 7 verschweißt, wobei ein Leerraum, also keine Schweißverbindung, zwischen den Schweißstellen der Bolzenelemente mit dem Blech 1 bzw. Blech 7 vorgesehen ist.

Wie den Zeichnungen deutlich zu entnehmen, ist das Blech 7 als Verstärkungsprofil für das Blech 1 vorgesehen, wobei derartige Bleche, beispielsweise für Wandelemente von Schwimmbecken, aber auch im Ladenbau, großflächige dekorative Elemente u. dgl. Verwendung finden können. Die Dicke der Blechteile kann beliebig gewählt werden, wobei die Bleche in der Regel dünner sind als der Durchmesser von runden Bolzenelementen. Als typische Abmessungen für die Dicke der Bleche sind 0,5 mm bis 2,5 mm zu nennen, wobei die Bolzenelemente selbst einen Durchmesser von 5,0 mm bis 8,0 mm aufweisen.

Wie aus den Fig. 3 und 4 deutlich ersichtlich, liegen Bolzenelemente 4, die an ihrer einen Stirnseite 9 mit dem ersten Blech 1 verschweißt sind, entlang ihrer Mäntel am U-förmigen Blech 7a an und sind mit diesem an ihrer weiteren Stirnfläche 9a verschweißt. Die Schweißverbindung 10 reicht nur bis zur Hälfte der Länge der Bolzen 4.

Die Schweißungen können auch mit Gas, Schutzgas oder anderen bekannten Verfahren durchgeführt werden.

## Patentansprüche

1. Verbindung von metallischen Blechen, insbesondere für Schwimmbecken, wobei ein erstes Blech (1) mit zumindest einem metallischen Bolzenelement (4) an der Stirnfläche desselben verschweißt ist, und das Bolzenelement (4) ein weiteres metallisches Blech (7, 7a) gegen das erste Blech (1) hält, dadurch gekennzeichnet, daß das Bolzenelement (4) mit einem Bereich des weiteren Bleches (7) verschweißt ist, welcher im Abstand vom ersten Blech (1) ist und das erstarrte Schweißbad (5) unter der das Bolzenelement tragenden Oberfläche (2) vor der benachbarten dekorativ gestalteten Oberfläche (3) des ersten Bleches (1) endigt, und die dekorative Oberfläche frei von Markierungen durch Wärmeeinbringung ist.

2. Verbindung nach Anspruch 1, dadurch gekennzeichnet, daß das Bolzenelement (4) an seiner der verschweißten Stirnfläche (9) gegenüberliegenden Stirnfläche (9a) mit dem weiteren Blech (7, 7a) verschweißt ist.

3. Verbindung nach Anspruch 1 oder 2, dadurch gekennzeichnet, daß das Bolzenelement (4) an dem weiteren Blech (7, 7a) zumindest mit einer Erzeugenden der Mantelfläche anliegt und teilweise entlang derselben verbunden ist.

4. Verbindung nach Anspruch 1, 2 oder 3, dadurch gekennzeichnet, daß die Oberfläche des verschweißten Bereiches des weiteren Bleches (7, 7a) quer zum ersten Blech (1) angeordnet ist.

5. Verbindung nach einem der Ansprüche 1 bis 4, dadurch gekennzeichnet, daß zwischen der Schweißverbindung des ersten Bleches (1) mit dem Bolzenelement (4) und dem weiteren Blech (7, 7a) ein Leerraum, insbesondere ein nicht verschweißter Bereich, vorgesehen ist.

6. Verbindung nach Anspruch 5, dadurch gekennzeichnet, daß die Schweißverbindung mit dem weiteren Blech sich über weniger als die halbe Bolzenlänge erstreckt (Fig. 3).

7. Verbindung nach einem der Ansprüche 1 bis 6, dadurch gekennzeichnet, daß das weitere Blech (7, 7a) zumindest U-förmig ist, wobei die Bolzenelemente (4) an den Schenkeln des U's anliegen, und Bolzenelemente mit einer Schweißverbindung entlang der rotationssymmetrischen Mantelfläche mit dem weiteren Blech (7, 7a) verbunden sind.

8. Verfahren zum Verbinden von metallischen Blechen, wobei zumindest ein Bolzenelement (4) an seiner Stirnfläche, insbesondere elektrisch, mit der Oberfläche eines ersten Bleches (1) verschweißt wird, und ein weiteres Blech (7) zum ersten Blech (1) über das Bolzenelement (4) gegen dieses gehalten wird, dadurch gekennzeichnet, daß das Bolzenelement (4) mit einem Bereich des weiteren Bleches (7) verschweißt wird, welcher im Abstand vom ersten Blech (1) ist und das erstarrte Schweißbad (5) unter der das Bolzenelement tragenden Oberfläche (2) vor der benachbarten dekorativ gestaltenen Oberfläche (3) des ersten Bleches (1) endigt, und die dekorative Oberfläche frei von Markierungen durch Wärmeeinbringung ist.

## Claims

1. Connection of metallic plates, especially for swimming pools, a first plate (1) being welded to at least one metallic bolt element (4) on the end face thereof and the bolt element (4) holding a further metallic plate (7, 7a) against the first plate (1), characterized in that the bolt element (4) is welded to a region of the further plate (7) which is distanced from the first plate (1) and the solidified weld pool (5) ends below the surface (2) supporting the bolt element in front of the adjacent, decoratively shaped surface (3) of the first plate (1) and the decorative surface is free from markings resulting from the introduction of heat.

2. Connection according to Claim 1, characterized in that the bolt element (4) is welded, on its end face (9a) opposite the welded end face (9), to the further plate (7, 7a).

3. Connection according to Claim 1 or 2, characterized in that the bolt element (4) bears against the further plate (7, 7a) at least with one generatrix of the contacting surface and is partially connected along the said generatrix.

4. Connection according to Claim 1, 2 or 3, characterized in that the surface of the welded region of the further plate (7, 7a) is disposed transversely to the first plate (1).

5. Connection according to one of Claims 1 to 4, characterized in that between the weld joint of the first plate (1) to the bolt element (4) and the further plate (7, 7a) there is provided an empty space, especially a non-welded region.

6. Connection according to Claim 5, characterized in that the weld joint to the further plate extends over less than half the bolt length (Fig. 3).

7. Connection according to one of Claims 1 to 6, characterized in that the further plate (7, 7a) is at least U-shaped, the bolt elements (4) bearing against the legs of the U and bolt elements being connected to the further plate (7, 7a) by a weld joint along the rotationally symmetrical contacting surface.

8. Process for connecting metallic plates, at least one bolt element (4) being welded at its end face, especially electrically, to the surface of a first plate (1) and a further plate (7) additional to the first plate (1) being held against the latter by the bolt element (4), characterized in that the bolt element (4) is welded to a region of the further plate (7) which is distanced from the first plate (1) and the solidified weld pool (5) ends below the surface (2) supporting the bolt element in front of the adjacent, decoratively shaped surface (3) of the first plate (1) and the decorative surface is free from markings resulting from the introduction of heat.

## Revendications

1. Liaison de tôles métalliques, en particulier pour des piscines, dans laquelle une première tôle (1) comportant au moins un élément de broche métallique (4) est soudée à la face frontale de celui-ci et dans lequel l'élément de broche (4) retient contre la première tôle (1) une autre tôle métallique (7, 7a), caractérisée en ce que l'élément de broche (4) est soudé à une zone de l'autre tôle (7) qui est à distance de la première tôle (1) et en ce que le bain de soudure solidifié (5) se termine en dessous de la surface (2) qui porte l'élément de broche, avant la surface (3), de la première tôle (1), voisine et façonnée de façon décorative et en ce que la surface décorative est sans marques par apport de chaleur.

2. Liaison suivant la revendication 1, caractérisée en ce qu'à l'autre tôle (7, 7a), l'élément de broche (4) est soudé par sa face frontale (9a) opposée à la face frontale (9) soudée.

3. Liaison suivant la revendication 1 ou 2, caractérisée en ce que l'élément de broche (4) est appliqué à l'autre tôle (7, 7a) au moins par une génératrice de la surface d'enveloppe et est relié partiellement le long de celle-ci.

4. Liaison suivant la revendication 1 ou 2 ou 3, caractérisée en ce que la surface de la zone soudée de l'autre tôle (7, 7a) est agencée transversalement à la première tôle (1).

5. Liaison suivant l'une quelconque des revendications 1 à 4, caractérisée en ce qu'entre l'autre tôle (7, 7a) et la liaison soudée de la première tôle (1) et de l'élément de broche (4) il est prévu un espace vide, en particulier une zone non soudée.

6. Liaison suivant la revendication 5, caractérisée en ce que la liaison soudée avec l'autre tôle s'étend (figure 3) sur moins que la moitié de la longueur de la broche.

7. Liaison suivant l'une quelconque des revendications 1 à 6, caractérisée en ce que l'autre tôle (7, 7a) a au moins une forme de U, les éléments de broche (4) étant appliqués contre les ailes du U et des éléments de broche étant reliés à l'autre tôle (7, 7a) par une liaison soudée le long de la surface d'enveloppe à symétrie de rotation.

8. Procédé pour la liaison de tôles métalliques, dans lequel au moins un élément de broche (4) est soudé, en particulier à l'électricité, par sa face frontale à la surface d'une première tôle (1), et dans lequel une autre tôle (7) est maintenue par rapport à la première tôle (1), contre cette dernière, par l'intermédiaire de l'élément de broche (4), caractérisé en ce que l'élément de broche (4) est soudé à une zone de l'autre tôle (7) qui est à distance de la première tôle (1) et en ce que le bain de soudure (5) solidifié se termine en dessous de la surface (2) qui porte l'élément de broche, avant la surface (3), de la première tôle (1), voisine façonnée de façon décorative et en ce que la surface décorative est sans marques par apport de chaleur.
